(19) Europäisches Patentamt
European Patent Office
Office européen des brevets

(11) Veröffentlichungsnummer: **0 074 622 A2**

(12) **EUROPÄISCHE PATENTANMELDUNG**

(21) Anmeldenummer: 82108308.6

(22) Anmeldetag: 09.09.82

(51) Int. Cl.$^3$: C 08 G 73/02
C 07 C 93/04, C 07 C 125/077
C 10 G 33/04

(30) Priorität: 12.09.81 DE 3136298

(43) Veröffentlichungstag der Anmeldung: 23.03.83 Patentblatt 83/12

(84) Benannte Vertragsstaaten: DE FR GB NL

(71) Anmelder: HOECHST AKTIENGESELLSCHAFT
Postfach 80 03 20
D-6230 Frankfurt/Main 80(DE)

(72) Erfinder: Böhm, Roland
Fischbacher Strasse 29
D-6233 Kelkheim (Taunus)(DE)

(72) Erfinder: Heiss, Lorenz, Dr.
Stormstrasse 39
D-6238 Hofheim am Taunus(DE)

(72) Erfinder: Hille, Martin, Dr.
In den Eichen 46
D-6237 Liederbach(DE)

(54) **Quaternierte polymere Polyoxyalkyl-alkylenpolyamine, Verfahren zu deren Herstellung und deren Verwendung.**

(57) Neue quaternierte polymere Polyoxyalkyl-alkylenpolyamine der Formel

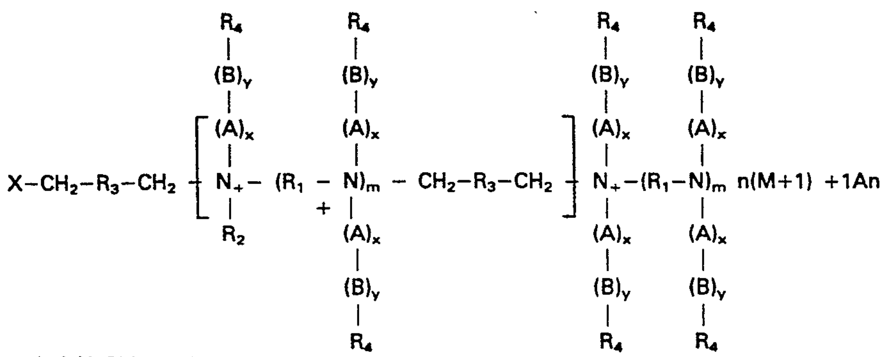

wobei X Chlor oder Brom,
$R_1$ $C_2$-$C_6$, vorzugsweise $C_2$-$C_3$-Alkylen,
$R_2$ $C_8$-$C_{25}$-Alkyl oder eine Gruppe der Formel $-(A)_x-(B)_y-R_4$
$R_3$ Phenylen oder Naphthylen,
$R_4$ Wasserstoff oder eine Gruppe der Formel $-CONH-R_5$
$R_5$ $C_2$-$C_{25}$-Alkyl, Phenyl oder Naphthyl,
A und B gleich oder verschieden sein können und eine Gruppe der Formel $-C_2H_4O-$ und $-C_3H_7O-$
x und y jeweils Zahlen von 0 bis 30, wobei die Summe von x und y mindestens 1 betragen soll,
n eine Zahl von 1 bis 6, m eine Zahl von 1 bis 30 und $An^{\ominus}$ ein Chlorid- oder Bromid-Ion bedeutet, Verfahren zu deren Herstellung und deren Verwendung als Demulgatoren und Korrosionsinhibitoren bei Rohölemulsionen.

EP 0 074 622 A2

0074622

Quaternierte polymere Polyoxyalkyl-alkylenpolyamine, Verfahren zu deren Herstellung und deren Verwendung

Bei neu erschlossenen Rohölfeldern wird in der Anfangsphase fast immer reines Rohöl gefördert und die Korrosion ist durch die Ölbenetzung der Förder- und Aufbereitungsanlagen zumeist minimal. Nach einer bestimmten Zeit, die von den Feld- und Förderbedingungen abhängt, werden dann zunehmende Mengen Wasser mitgefördert. Das Wasser ist dabei emulsionsartig mit Öl als äußerer Phase im Rohöl verteilt. Die Verwässerung beginnt zumeist bei den am Rande des Ölfeldes gelegenen Sonden. Vor dem Transport muß das Wasser unter eine akzeptable Konzentration gesenkt werden. Dies kann durch den Zusatz spezieller Tenside, genannt Demulgatoren oder Emulsionsspalter, und zumeist nach zusätzlicher Erwärmung erreicht werden. Hinter den Dosierstellen für den Emulsionsspalter beginnt die Wasserausscheidung, welche zumeist erst nach dem Erwärmen in Absetztanks zu der geforderten Spezifikation führt. Mit der beginnenden Wasserausscheidung bildet sich dann in den Leitungen und Tanks eine Dreiphasenschichtung mit oben Öl, in der Mitte Emulsion und unten Wasser. Dies führt zur Wasserbenetzung des unteren Teils der Leitungen und Aufbereitungsanlagen.

In Abhängigkeit von den korrosiven Bestandteilen des Wassers wie Kohlendioxid, Schwefelwasserstoff und Salz tritt dann in den wasserbenetzten unteren Teilen der Leitungen und Aufbereitungsanlagen Korrosion ein. Diese Korrosion in den Ölfeldanlagen kann wirksam durch kationische Tenside inhibiert werden. Sie haben jedoch vielfach den Nachteil, daß sie emulsionsstabilisierend wirken und dadurch die für eine optimale Abtrennung des Wassers nötige Demulgatormenge erhöhen.

BAD ORIGINAL

Es wurde nun gefunden, daß die nachfolgend beschriebenen Verbindungen neben ihrer Wirkung als Demulgatoren gleichzeitig inhibierende Eigenschaften besitzen. Bei der Förderung des Rohöls wird damit neben der Abtrennung des Wassers zusätzlich eine Korrosionsinhibierung der Ölfeldanlage erzielt.

Gegenstand der Erfindung sind neue quaternierte polymere Polyoxyalkyl-alkylenpolyamine der Formel

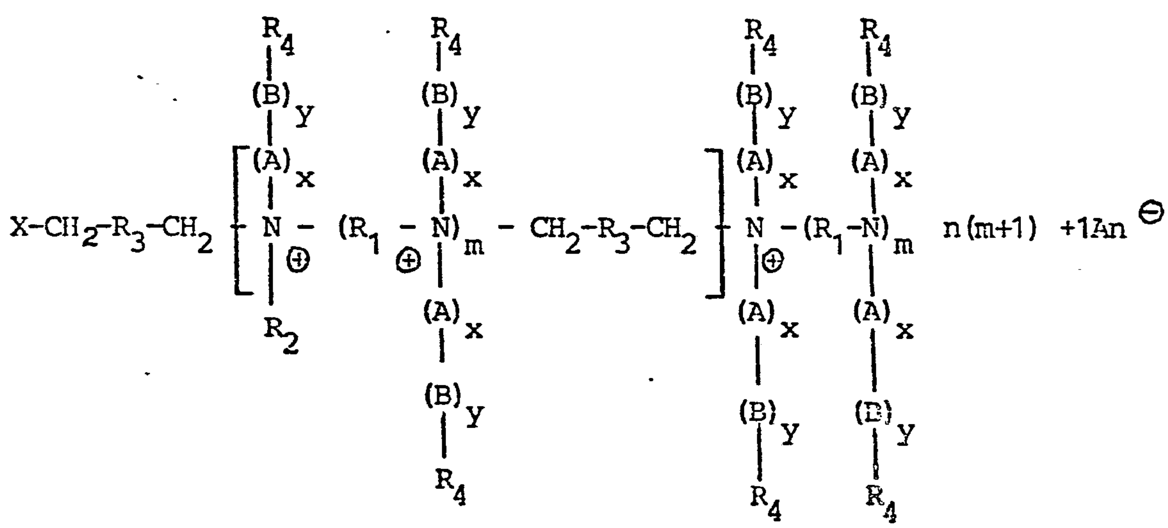

wobei X Chlor oder Brom,

$R_1$ $C_2$-$C_6$, vorzugsweise $C_2$-$C_3$-Alkylen,

$R_2$ $C_8$-$C_{25}$-Alkyl oder eine Gruppe der Formel $-(A)_x-(B)_y-R_4$

$R_3$ Phenylen oder Naphthylen,

$R_4$ Wasserstoff oder eine Gruppe der Formel $-CONH-R_5$

$R_5$ $C_2$-$C_{25}$-Alkyl, Phenyl oder Naphthyl,

A und B gleich oder verschieden sein können und eine Gruppe der Formel $-C_2H_4O-$ und $-C_3H_7O-$

x und y jeweils Zahlen von 0 bis 30, wobei die Summe von x und y mindestens 1 betragen soll,

n eine Zahl von 1 bis 6, m eine Zahl von 1 bis 30 und $An^{\ominus}$ ein Chlorid- oder Bromid-Ion bedeutet.

Die Verbindungen der obigen Formel basieren auf Alkylenpolyaminen wie beispielsweise Ethylendiamin, Diethylentriamin, Triethylentetramin usw. sofern $R_1$ einen Ethylenrest darstellt oder auf Propylendiamin, Dipropylentriamin, Tripropylentetramin usw., wenn $R_1$ einen Propylenrest bedeutet. Es können auch Gemische von Polyaminen mit Ethylen- und Propylenradikalen wie beispielsweise 4,7,11-Triazotetradecan-1,14-diamin oder 4,8,11,15-Tetrazooctadecan-1,18-diamin auftreten. Wenn $R_2$ eine Alkylgruppe bedeutet, kommen als Ausgangsverbindungen die als Handelsprodukte verfügbaren Alkylpolyamine in Frage wie beispielsweise N-Octylpropylendiamin, N-Dodecylpropylendiamin oder N-Octadecylpropylendiamin.

Die Herstellung der Verbindungen der obigen Formel erfolgt, indem man Alkylenpolyamine,wie sie oben beschrieben sind, zunächst nach bekannten Verfahren oxalkyliert, vorzugsweise in Gegenwart eines basischen Katalysators wie Natriummethylat oder Natriumhydroxid. Nach den bei Oxalkylierungsreaktionen möglichen Varianten kann man entweder nur mit Ethylenoxid oder nur Propylenoxid arbeiten. Bei Verwendung beider Verbindungen kann man deren Gemisch nehmen, wobei man dann eine statistische Verteilung der Ethylenoxid- und Propylenoxid-Einheiten in der Polyoxalkylkette erhält. Daneben ist es auch möglich, Ethylenoxid und Propylenoxid nacheinander zu addieren, wobei man Blockpolymerketten erhält. Bei den Zahlenwerten x und y handelt es sich um Durchschnittswerte, da die technische Oxalkylierung generell Produktgemische ergibt.

Die so erhaltenen oxalkylierten Alkylenpolyamine werden dann für den Fall, daß $R_4$ eine Carbamatgruppe bedeutet, mit einem Alkyl- bzw. Arylisocyanat umgesetzt. Anschließend erfolgt eine Quaternierung bei gleichzeitiger Polymerisation bzw. Vernetzung, indem man das oxalkylierte

Polyamin oder dessen Carbamat umsetzt mit einem Bis-chlormethyl-aryl, wie z.B. p-Xylylendichlorid, o-Xylylendichlorid, m-Xylylendichlorid oder 1,4-Bischlormethylnaphthalin. Die Reaktion erfolgt durch mehrstündiges Erhitzen der Reaktionspartner in einem niedrig siedenden Alkohol bei dessen Siedetemperaturen, beispielsweise in Ethanol, Isopropanol oder Isobutanol. Das Molverhältnis von Bis-(halomethyl)-benzol beträgt 1:1. Als Endprodukte erhält man Polymere, deren Kettenlänge ungefähr durch die Zahlen 1 bis 6 für den Index n in der Formel I angegeben werden können.

Die erfindungsgemäßen Verbindungen eignen sich sehr gut zum Spalten von Emulsionen aus Wasser und Erdöl. Man setzt diese Produkte den Rohölemulsionen in Konzentrationen von 5 bis 300, vorzugsweise 10 bis 100 ppm zu entweder in unverdünnter Form oder als Lösung, die im Verhältnis 1 : 200 mit einem organischen Lösungsmittel verdünnt werden. Darüberhinaus inhibieren diese Verbindungen die Korrosion in den Anlagen für die Erdgas- und Rohölförderung und -aufbereitung.

Beispiel 1

10,3 g (0,1 Mol) Diethylentriamin werden im Autoklaven bei 70 - 160°C mit 220 g (5 Mol) Ethylenoxid und dann mit 500 g (8,5 Mol) Propylenoxid alkoxyliert, wobei man als Katalysator 0,1 g Natriummethylat zusetzt. Das erhaltene Reaktionsprodukt wird mit 17,5 g (0,1 Mol) p-Xylylenchlorid und 750 g Isopropanol 10 Stunden unter Rückfluß gekocht, wobei Quaternisierung und Vernetzung eintritt. Nach Entfernung des Lösemittels erhält man ein Endprodukt von folgender Formel:

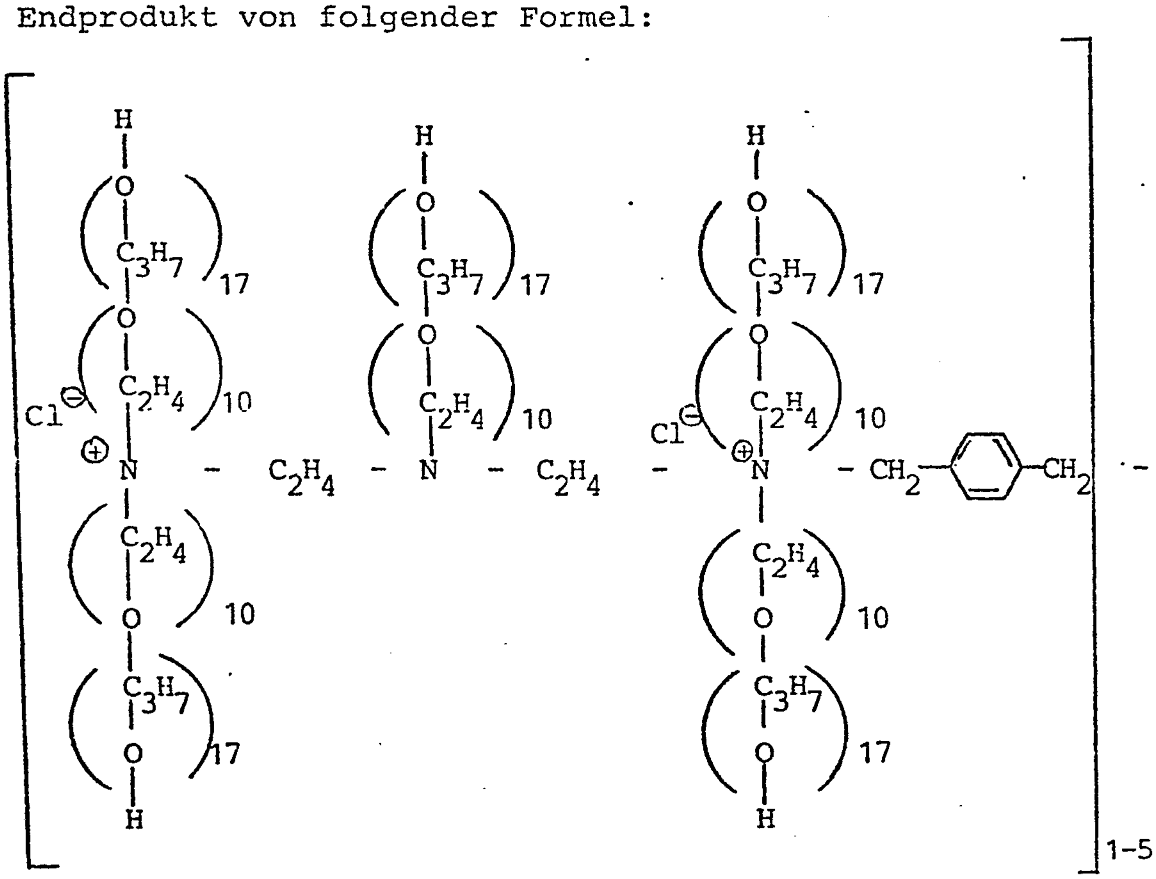

Ngas: 0,5 % (Theorie 0,56 %)

Nbas: 0,18 % (Theorie 0,19 %)

$Cl^-$ : 0,9 % (Theorie 0,95 %)

Molgewicht: (osmometrisch) ca. 15 - 20.000

Beispiel 2

30 g (0,1 Mol) Octadecylpropylendiamin werden im Autoklaven bei 80-160°C mit 132 g (3 Mol) Ethylenoxid und mit 0,3 g Natriummethylat als Katalysator zur Reaktion gebracht. Hierauf gibt man 35,7 g (0,3 Mol) Phenylisocyanat dazu und erhitzt 2 Stunden bei 100°C. Mit 17,5 g (0,1 Mol) p-Xylylenchlorid in 220 g Isopropanol kocht man 10 h unter Rückfluß, wobei man nach Entfernung des Lösungsmittels das Endprodukt von folgender Formel erhält:

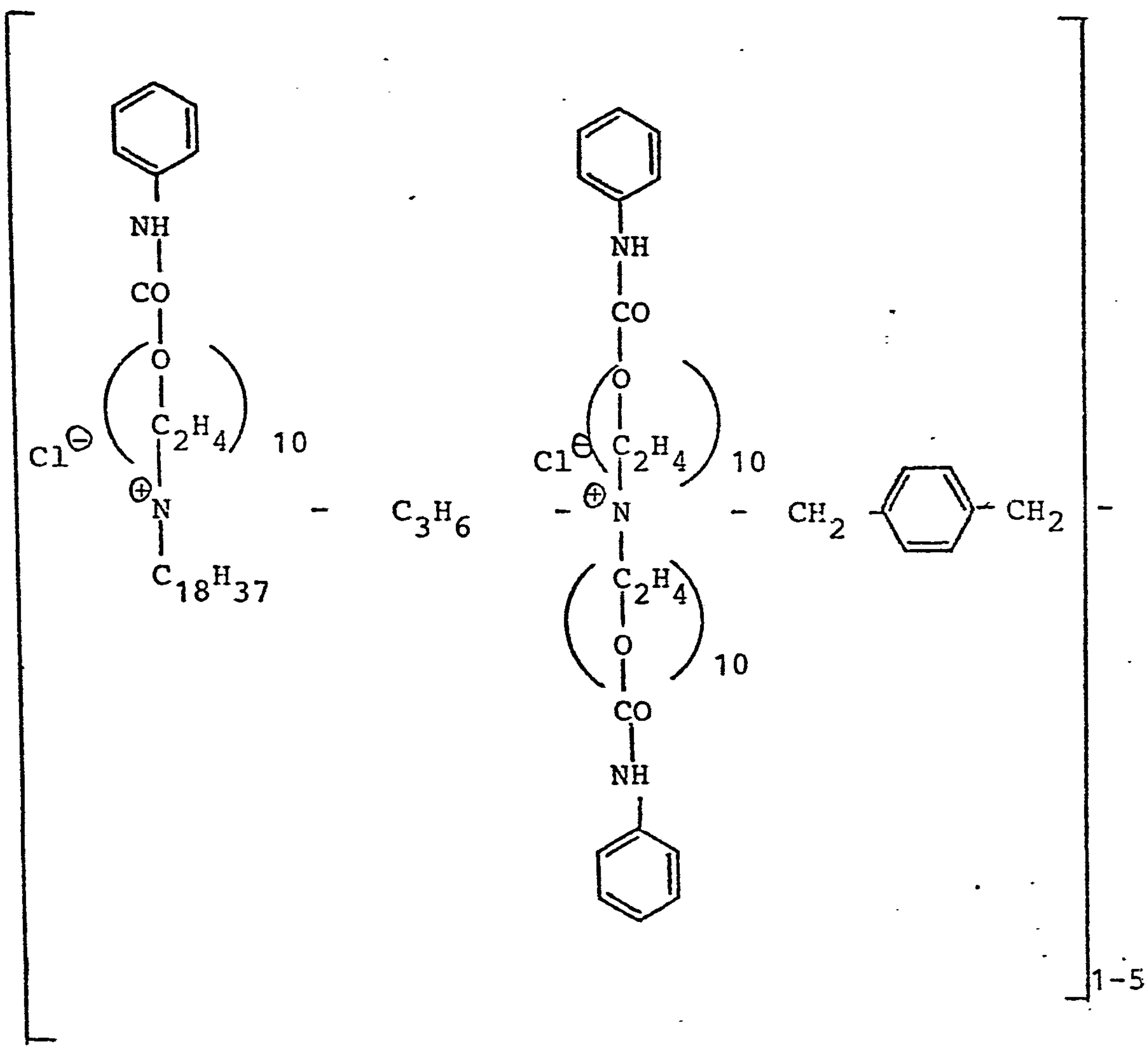

Ngas: 1,3 % (Theorie 1,3 %)

$Cl^-$ : 3,2 % (Theorie 3,3 %)

Molgewicht: (osmometrisch) ca. 4 - 5.000

Beispiel 3

12 g (0,2 Mol) Ethylendiamin werden im Autoklaven bei 70 - 160°C mit 186 g (3,2 Mol) Propylenoxid und dann mit 176 g (4 Mol) Ethylenoxid umgesetzt (Katalysator 0,1 g Natriummethylat). Hierauf gibt man 236 g (0,8 Mol) Octadecylisocyanat zu und erhitzt 3 Stunden bei 110°C. Mit 35 g (0,2 Mol) p-Xylylenchlorid in 200 g Isopropanol kocht man 10 Stunden unter Rückfluß, wobei man nach Entfernung des Lösungsmittels folgendes Endprodukt enthält:

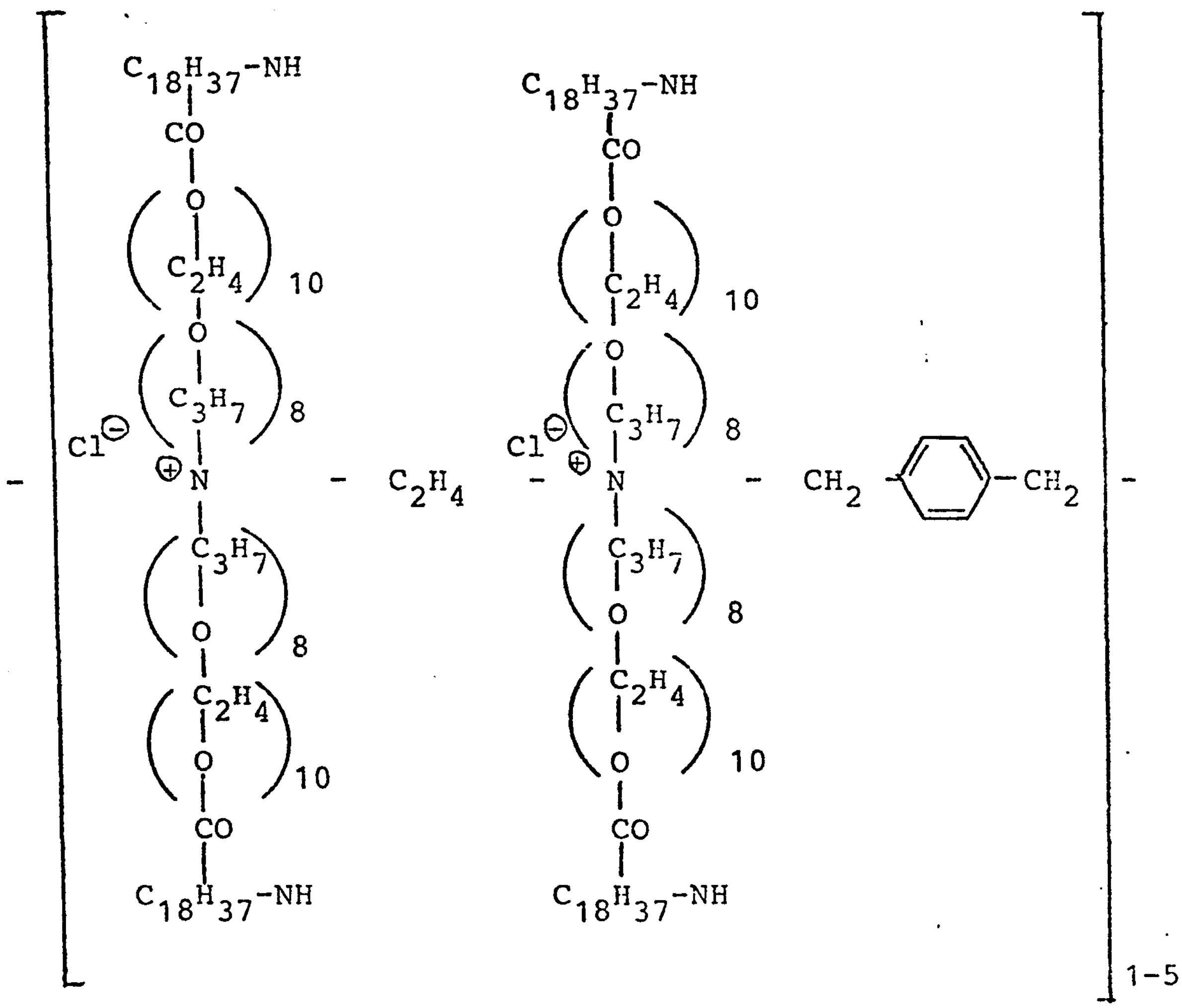

Ngas: 0,8 % (Theorie 0,87 %)

$Cl^-$ : 2,1 % (theorie 2,2 %)

Molgewicht: (osmometrisch) 4 - 5.000

Im folgenden wird die demulgierende Wirkung der erfindungsgemäßen Verbindungen an Rohölemulsionen bei den in den Ölfeldern üblichen Bedingungen und Einsatzmengen gezeigt. Die Demulgatoren wurden dabei als 50%ige isobutanolische Lösungen mit Mikrodosiereinrichtungen injiziert. Die Abscheidung des emulgierten Wassers erfolgt in konischen, kalibrierten, mit Stopfen verschließbaren Gläsern und die Emulsionseinsatzmenge beträgt jeweils 100 $cm^3$. In den Versuchstabellen werden die in bestimmten Zeiten abgeschiedenen Mengen Emulsionswasser in % angegeben.

Durch Vorversuche wurde der absolute Wassergehalt der Emulsionen jeweils nach Dean-Stark bestimmt. Die Dosiermenge der Demulgatoren, der absolute Wassergehalt der Emulsion, die Separiertemperatur und der Emulsionsursprung sind in den einzelnen Tabellen aufgeführt.

Tabelle 1

Demulgiertemperatur : 45°C
Wassergehalt der Emulsion: 42 %
Dosiermenge: 50 ppm
Ursprung: Emsland /BRD
Angaben in % Wasserseparation

| Beispiel Minuten | 10 | 20 | 30 | 60 | 100 |
|---|---|---|---|---|---|
| 1 | 16 | 48 | 76 | 92 | 100 |
| 2 | 12 | 36 | 68 | 84 | 96 |
| 3 | 22 | 42 | 72 | 88 | 95 |

Tabelle 2

Demulgiertemperatur : 30 °C
Wassergehalt der Emulsion: 38 %
Dosiermenge : 45 ppm
Ursprung : Tuimaza
Angaben in % Wasserseparation

| Beispiel | Minuten | 10 | 20 | 30 | 60 | 100 |
|---|---|---|---|---|---|---|
| 1 | | 15 | 37 | 66 | 84 | 96 |
| 2 | | 26 | 56 | 78 | 94 | 100 |
| 3 | | 18 | 44 | 74 | 88 | 98 |

Tabelle 3

Demulgiertemperatur : 45°C
Wassergehalt der Emulsion : 34 %
Dosiermenge : 40 ppm
Ursprung : Suethina
Angaben in % Wasserseparation

| Beispiel | Minuten | 10 | 20 | 30 | 60 | 100 |
|---|---|---|---|---|---|---|
| 1 | | 28 | 56 | 78 | 96 | 100 |
| 2 | | 16 | 44 | 72 | 92 | 98 |
| 3 | | 34 | 62 | 82 | 95 | 100 |

Inhibierung der Korrosion

Die korrosionsinhibierende Wirkung der erfindungsgemäßen Verbindungen wird durch den Gewichtsverlust von Test-Coupons mit 20 $cm^2$ Oberfläche in 20%iger Natriumchloridlösung über 6 Stunden bei 60°C ermittelt. Durch die gerührte saline Lösung perlt ständig ein Strom von Kohlendioxid. Die Tabelle gibt die Inhibierwirkung in % an.

Tabelle 4

| Beispiel | Einsatzmenge in mg/l | |
|---|---|---|
| | 10 | 20 |
| 1 | 25 | 70 |
| 2 | 86 | 94 |
| 3 | 38 | 88 |

Die Anwendungsbeispiele zeigen, daß die erfindungsgemäßen Verbindungen in den für Demulgatoren und Inhibitoren üblichen Einsatzmengen Rohölemulsionen sehr effektiv demulgieren und in den Rohölbegleitwässern die Korrosion von Kohlenstoffstahl gut inhibieren.

1. Quaternierte polymere Polyoxyalkyl-alkylenpolyamine der Formel

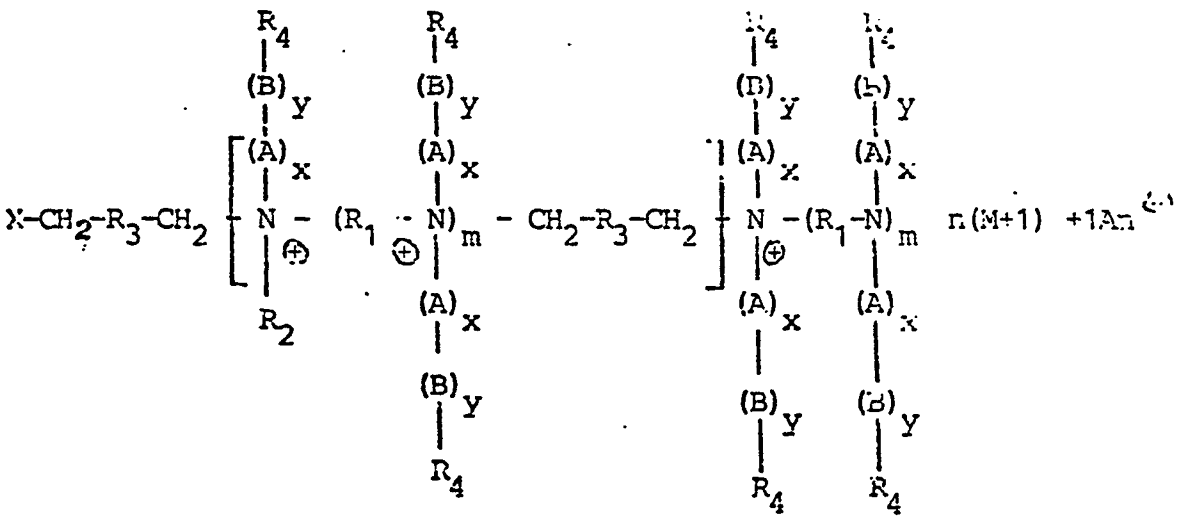

wobei X Chlor oder Brom,

$R_1$ $C_2$-$C_6$, vorzugsweise $C_2$-$C_3$-Alkylen,

$R_2$ $C_8$-$C_{25}$-Alkyl oder eine Gruppe der Formel $-(A)_x-(B)_y-R_4$

$R_3$ Phenylen oder Naphthylen,

$R_4$ Wasserstoff oder eine Gruppe der Formel $-CONH-R_5$

$R_5$ $C_2$-$C_{25}$-Alkyl, Phenyl oder Naphthyl,

A und B gleich oder verschieden sein können und eine Gruppe der Formel $-C_2H_4O-$ und $-C_3H_7O-$

x und y jeweils Zahlen von 0 bis 30, wobei die Summe von x und y mindestens 1 betragen soll,

n eine Zahl von 1 bis 6, m eine Zahl von 1 bis 30 und

$An^{\ominus}$ ein Chlorid- oder Bromid-Ion bedeutet.

0074622



2. Verfahren zur Herstellung der Verbindungen nach Anspruch 1, dadurch gekennzeichnet, daß man eine Verbindung der Formel

$$R_2'NH-R_1-NH_2$$

worin $R_2'$ Wasserstoff oder $C_8-C_{25}$-Alkyl bedeutet, oxalkyliert, das Oxalkylierungsprodukt gegebenenfalls mit einem Alkyl- oder Arylisocyanat umsetzt und anschließend mit einem Bis-(halomethyl)-aryl quaterniert und vernetzt.

3. Verwendung der Verbindungen nach Anspruch 1 als Demulgatoren für die Spaltung von Rohölemulsionen und als Korrosionsinhibitoren in Anlagen für die Erdgas- und Rohölförderung und -aufbereitung.

BAD ORIGINAL